# EUROPÄISCHE PATENTSCHRIFT

(11) **EP 2 665 790 B1**
(45) Veröffentlichungstag und Bekanntmachung des Hinweises auf die Patenterteilung: **07.10.2015**
(21) Anmeldenummer: 11805461.8
(22) Anmeldetag: 15.12.2011
(51) Int. Cl.: C09J 175/04, C09J 175/06, C08G 18/10, C08G 18/28, C08J 5/12

(54) **LAGERSTABILER NCO-FREIER KASCHIERKLEBSTOFF**
STORAGE-STABLE, NCO-FREE LAMINATING ADHESIVE
ADHÉSIF DE CONTRECOLLAGE EXEMPT DE NCO, STABLE AU STOCKAGE

(30) Priorität: 19.01.2011 DE 102011002885
(43) Veröffentlichungstag der Anmeldung: 27.11.2013
(73) Patentinhaber: Henkel AG & Co. KGaA, 40589 Düsseldorf (DE)
(72) Erfinder: GENTSCHEV, Pavel, 47877 Willich (AT); LOHR, Christoph, 40822 Mettmann (DE); LOSCHEN, Christoph, 40699 Erkrath (DE)
(74) Vertreter: Peters, Frank M.
(86) Internationale Anmeldenummer: PCT/EP2011/072853
(87) Internationale Veröffentlichungsnummer: WO 2012/097929

(56) Entgegenhaltungen:
- EP-A1- 1 550 704
- WO-A1-92/05212
- WO-A2-2010/142501

## Beschreibung

Die Erfindung betrifft einen Klebstoff auf Basis von Polyurethanprepolymeren enthaltend hydrolisierbare Silangruppen zum Verkleben von flächigen Substraten. Die Erfindung betrifft weiter die Verwendung dieses Klebstoffs als Kaschierklebstoff für Mehrschichtfolien.

Transparente NCO-vernetzende 1-Komponenten-Klebstoffe als Umsetzungsprodukt aus Polyolen und Isocyanaten sind in der EP 0464483 bekannt. Dort werden Isocyanate eingesetzt, die Harnstoffgruppen aufweisen. Solche Harnstoffgruppen zeigen eine hohe Wasserstoffbrückenbindung und damit meist eine hohe Viskosität des Polymeren. Außerdem führen monomere Isocyanate bei der Polymerherstellung zu einem Restmonomergehalt an gesundheitsschädlichen Isocyanaten, der durch zusätzliche Maßnahmen vermindert werden muss.

Weiterhin ist die US 5990257 bekannt. Diese beschreibt ein Verfahren zu Herstellung von Silylgruppen aufweisenden Polyurethanen, wobei Isocyanate im Unterschuss eingesetzt werden zu Polyolen. Weitere OH-Gruppen werden dann mit Isocyanatosilanen zu Silylgruppen-haltigen Prepolymeren umgesetzt.
Die Polymere weisen ein Molekulargewicht von mehr als 12000 g/mol auf. Die Viskosität liegt oberhalb von 57 Pa.s. Als Anwendung ist eine Verwendung als Dichtungsmasse beschrieben, die nach Härtung eine niedrige Haftung aufweisen soll.

Die DE 102009026900 beschreibt Kaschierklebstoffe, die Alkohole als Lösemittel enthalten. Dafür werden Prepolymere auf Basis von Polyurethanen beschrieben, die vernetzbare Silangruppen enthalten. Diese Klebstoffe weisen jedoch einen hohen Gehalt an Alkoholen auf, beispielsweise Methanol oder Ethanol. Maßnahmen zur Verminderung der Alkohole werden nicht beschrieben.

Weiterhin ist die EP 1674546 bekannt. In dieser werden feuchtigkeitshärtende Zusammensetzungen beschrieben, die aus NCO-Gruppen-haltigen Polyurethanen erhalten werden, die mit nucleophil substituierten Silanen umgesetzt werden. Es wird die schnelle Reaktion dieser Klebstoffe mit Feuchtigkeit beschrieben. Die Klebstoffe werden als Schmelzklebstoffe eingesetzt, d.h. sie liegen bei Raumtemperatur als Feststoff vor und sind nur in der Wärme aufzutragen.

Es ist die noch nicht offengelegte De 102010000881 bekannt. Diese beschreibt lösemittelhaltige Kaschierklebstoffe, die über Silangruppen vernetzen. Dabei werden die NCO-Gruppen des Prepolymeren über Aminosilane abreagiert. Dabei wird die Menge so gewählt, dass keine NCO-Gruppen im Klebstoff enthalten sind. Der Gehalt an Alkoholen in der Klebstoffschicht beispielsweise aus der Vernetzungsreaktion kann durch Zusatz von Verbindungen mit Carbonsäureanhydridgruppen vermindert werden.

Die EP 1550704 A1 offenbart einen Klebstoff enthaltend ein TriethoxysilyletherPrepolymer und ein Anhydrid- oder Säure-funktionalisiertes Polymer. Es bezieht sich aber nicht auf die Verwendung eines Anhydrid-funktionellen Polymeren, um die Freisetzung von niedermolekularen Substanzen wie Alkoholen zu vermeiden.

Die WO 92/05212 A1 offenbart Alkoxysilan-terminierte Polyurethane, die in Klebemassen verwendet werden können, in denen NCO-Gruppen von Polyurethanprepolymeren mit Monoalkylpolyetheralkoholen und/oder linearen oder verzweigten aliphatischen, monofunktionellen Alkoholen und mit Alkoxysilanen umgesetzt werden.

J Die Zusammensetzungen des Stands der Technik haben verschiedene Nachteile bei der Anwendung als Kaschierklebstoff. Isocyanat-haltige Klebstoffe sind aus Gründen des Arbeitschutzes nicht unbedenklich. Außerdem ist eine Lagerung nur unter streng wasserfreien Bedingungen möglich. Silan-härtende Systeme enthalten oder bilden bei der Vernetzung einwertige Alkohole. Diese können den Inhalt von Folienverpackungen negativ beeinflussen. Außerdem wird bei einer Verminderung der Abspaltprodukte die Vernetzungsreaktion gefördert. Durch den Aufbau der Polymere aus NCO-Prepolymeren werden ausreichende Mengen an reaktiven Silanverbindungen benötigt, um eine NCO-Freiheit sicherzustellen. Das führt zu eine erhöhten Zahl von vernetzenden reaktiven Bestandteilen. Durch die Menge der Silangruppen wird die Lagerstabilität deutlich herabgesetzt. Außerdem ist auch der Aufbau der vollständigen Verklebung verzögert.
Aufgabe der vorliegenden Erfindung ist es deswegen einen bei Raumtemperatur niedrigviskosen Klebstoff zur Verfügung zu stellen, der in dünner Schicht auf große Substratflächen aufgetragen werden kann. Nach Vernetzung soll die Klebstoffschicht möglichst keine migrierbaren physiologisch bedenklichen Inhaltsstoffe aufweisen, beispielsweise sollen primäre aromatische Amine oder monofunktionelle Alkohole vermindert sein. Der Klebstoff soll eine gute Haftung zu den Substraten aufweisen und einen schnellen Haftungsaufbau. Weiterhin soll der Klebstoff eine Vernetzungsdichte aufweisen, die elastische Verklebungseigenschaften ergibt.

Die Erfindung wird gelöst durch bereitstellen eines vernetzbarer 1-Komponenten-Kaschierklebstoff enthaltend 25 bis 80 Gew- % Polyesterprepolymere, Polyetherprepolymere und /oder Polyurethanprepolymere, die frei von NCO-Gruppen sind und die mindestens eine über NCO-Gruppen gebundene vernetzbare Alkoxysilangruppe aufweisen sowie zusätzlich NCO-Gruppen umgesetzt mit Verbindungen, die keine hydrolisierbaren Gruppen enthalten, und das Prepolymer ein Molekulargewicht von 2000 bis 30000 g/mol besitzt, 74 bis 19 Gew-% organische Lösemittel mit einem Siedepunkt bis 130°C, 1 bis 20 Gew.-% Polymere, Oligomere und/oder Monomere, die eine oder mehrere Anhydridgruppen enthalten, sowie 0 bis 15 Gew- % Additive, wobei die Viskosität des Klebstoffs zwischen 50 bis 20000 mPas (nach DIN ISO 2555) beträgt, gemessen bei 15 bis 45°C.

Die erfindungsgemäß geeigneten Prepolymer können durch Umsetzung von Polyolen mit einem Überschuss an Diisocyanaten hergestellt werden. Dabei werden NCO-haltige Zwischenprodukte erhalten, die danach mit bifunktionellen Silanverbindungen umgesetzt werden, die eine mit dem Polymerrückgrat reaktive Gruppe und zusätzlich mindestens eine vernetzbare Silangruppen enthalten, zusammen einwertigen nucleophilen Verbindungen, die keine hydrolisierbaren Gruppen enthalten.

Geeignete Polyesterpolyole für die Herstellung erfindungsgemäßer Prepolymere sind beispielsweise durch Polykondensation herstellbar. So können difunktionelle und/oder trifunktionelle niedermolekulare Alkohole mit einem Unterschuss an Dicarbonsäuren und/oder Tricarbonsäuren kondensiert werden. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Geeignete Dicarbonsäuren sind beispielsweise Bernsteinsäure, Adipinsäure, Korksäure, Azelainsäure, Sebacinsäure und ihre höhere Homologen mit bis zu 16 C-Atomen, ferner ungesättigte Dicarbonsäuren wie Maleinsäure oder Fumarsäure, Dimerfettsäure oder Trimerfettsäure oder aromatische Dicarbonsäuren, insbesondere die isomeren Phthalsäuren, wie Phthalsäure, Isophthalsäure oder Terephthalsäure, Anhydride wie beispielsweise Tetrahydrophthalsäureanhydrid, Hexahydrophthalsäure-anhydrid, Glutarsäureanhydrid, Maleinsäureanhydrid, oder Gemische aus zwei oder mehr solche Säuren. Als gegebenenfalls anteilsweise zusetzbare Tricarbonsäuren sind beispielsweise Zitronensäure oder Trimellithsäure geeignet. Die Mengen werden so gewählt, dass endständig OH-funktionelle Polyesterdiole erhalten werden. In einer bevorzugten Ausführungsform sind Gemische aus aliphatischen und aromatischen Carbonsäuren enthalten.

Zur Umsetzung mit den oben genannten Carbonsäuren geeignet sind insbesondere aliphatische Alkohole. Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, 1,4-Hydroxymethyl-cyclohexan, 2-Methyl-1,3-propandiol, Triethylenglykol, Ethylenglykol, Polyethylenglykol, Dipropylenglykol, Polypropylenglykol, Dibutylenglykol und Polybutylenglykol

Ebenfalls geeignet sind höherfunktionelle Alkohole wie beispielsweise Glycerin, Trimethylolpropan, Pentaerythrit, Neopentylglycol sowie oligomere Ether der genannten Substanzen mit sich selbst oder im Gemisch aus zwei oder mehr der genannten Ether untereinander.

Geeignete Polyole zur Herstellung der Polyester sind auch Umsetzungsprodukte niedermolekularer polyfunktioneller Alkohole mit Alkylenoxiden, sogenannte Polyether. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Diese sollen ein Molekulargewicht von etwa 400 bis etwa 2000 g/mol aufweisen.

Ebenfalls geeignet sind Polyesterpolyole, die durch Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit Lactonen, insbesondere Caprolacton, entstehen. Dabei sind auch 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol als Alkohole geeignet.

Es können aber auch Polyesterpolyole oleochemischer Herkunft verwendet werden. Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate.

Verfahren zur Herstellung solcher OH-funktioneller Polyester sind bekannt. Auch sind solche Polyesterpolyole kommerziell erhältlich.

Eine andere Klasse von geeigneten Polyolen als Polymerrückgrat sind Polyetherpolyole. Als Polyetherpolyole sind die bekannten Umsetzungsprodukte aus Diolen oder Triolen geeignet, wie Ethylenglykol, Propylenglykol-1,2 oder -1,3, Butylenglykol-1,4 oder -1,3, Hexandiol-1,6, Octandiol-1,8, Neopentylglykol, 1,4-Hydroxymethylcyclohexan, 2-Methyl-1,3-propandiol, Glycerin, Trimethylolpropan, Hexantriol-1,2,6, mit Alkylenoxiden, wie beispielsweise Propylenoxid, Butylenoxid. Diese Polyole können zwei oder drei OH-Gruppen aufweisen. Solche Polyetherpolyole sind kommerziell erhältlich.

Eine weitere Gruppe von geeigneten Polyolen sind Polyurethanpolyole. Diese können durch Umsetzung von insbesondere Diolen mit einem Molekulargewicht unter 2000 g/mol mit einem Unterschuss an Diisocyanaten hergestellt werden. Es können die oben erwähnten Alkylendiole, Polyetherdiole oder Polyesterdiole eingesetzt werden. Die Menge der Isocyanate wird so gewählt, dass OH- Gruppen aufweisende Umsetzungsprodukte erhalten werden. Diese Polyurethandiole können separat hergestellt werden, es ist jedoch auch möglich, dass sie bei der Umsetzung der Polyole mit den unten beschriebenen Isocyanaten anteilig bei der Reaktion entstehen.

Das Molekuargewicht geeigneter Polyole soll etwa von 400 bis 25000 g/mol betragen (zahlenmittleres Molekulargewicht, M_{N}, wie über GPC bestimmbar), insbesondere von 2000 bis 20000 g/mol. Bevorzugt sollen mindestens 50% Polyesterpolyole enthalten sein, insbesondere ausschließlich Polyesterpolyole, besonders bevorzugt Polyesterdiole mit endständigen OH-Gruppen.

Es können aus den oben beschriebenen Polyester- und /oder Polyetherpolyolen durch Umsetzung mit einem Überschuss an Diisocyanaten NCO-gruppenhaltigen Prepolymere hergestellt werden. Dabei werden die Polyole in flüssiger oder aufgeschmolzener Form, ggf. auch Lösemittel enthaltend, mit Diisocyanaten umgesetzt. Das kann auch durch erhöhte Temperatur unterstützt werden, ebenso ist es bekannt, dass geringe Mengen an Katalysatoren zugesetzt werden können. Durch die Auswahl der Isocyanate und die Menge kann sichergestellt werden, dass nur geringe Anteile an freien nicht umgesetzten Diisocyanaten in der Reaktionsmischung vorhanden sind. Gegebenenfalls ist es auch möglich, überschüssige monomere Isocyanate durch Destillation abzutrennen. Solche Verfahren sind dem Fachmann bekannt. Dabei kann der Polyester nur endständige NCO-Gruppen enthalten, oder es bilden sich durch Molekuargewichtsaufbau Polyurethanprepolymere mit reaktiven NCO-Gruppen. Diese Polyurethanprepolymere sind auch zur Synthese der erfindungsgemäß einzusetzenden Silan-haltigen Prepolymere geeignet.

Als Isocyanate sind insbesondere die bekannten aliphatischen oder aromatischen Diisocyante geeignet, wie 1,6-Hexamethylendiisocyanat (HDI), 1-Isocyanato-3,3,5-trimethyl-5-isocyanatomethylcyclohexan (IPDI), Xylylendi-isocyanat (XDI), Tetramethylxylylendiisocyanat (TMXDI), 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische, Cyclohexyldiisocyanat (CHDI), Hexahydroxylylendiisocyanat (HXDI), m-Xylylendiisocyanat (XDI), Naphthalindiisocyanat (NDI) oder Bistoluylendiisocyanat (TODI). Die Menge wird so gewählt, dass ein NCO-terminiertes Prepolymer erhalten wird.

Erfindungsgemäß sollen die NCO-Gruppen-haltigen Reaktionsprodukte im Durchschnitt zwei bis drei NCO.-Gruppen enthalten.

Zur Herstellung der erfindungsgemäß geeigneten Prepolymere werden diese NCO-Gruppen haltigen Umsetzungsprodukte anschließend mit Silanverbindungen (A) umgesetzt, die zusätzlich zu einer nucleophilen Gruppe hydrolisierbare Silangruppen enthalten.

Als geeignete Silane werden organofunktionelle Silane wie hydroxyfunktionelle, mercaptofunktionelle oder aminofunktionelle Silane der allgemeinen Formel

Nu-(Alkyl-Si (R²)ₐ (OR¹)_{b})c,

mit

Nu = NH, NH₂, SH, OH

Alkyl = C₁, C₂, C₃, C₄, C₆, linear oder verzweigt oder cycloalkyl
R² = Methyl, Ethyl, Propyl, Butyl,
a = 0,1,
R¹ = Alkylrest mit 1 bis 20 C-Atomen oder H
b = 2, 3,
c = 1,2
eingesetzt. Die Silangruppe sollen mindestens eine bevorzugt zwei insbesondere drei hydrolysierbare Reste enthalten. Insbesondere sind C₁ bis C₆ -Alkohole oder OH-Gruppen geeignet. Diese Reste können entweder ausschließlich oder gemischt am Siliziumatom enthalten sein. Es können zusätzlich 0 oder 1 Alkylgruppe am Siliziumatom enthalten sein, insbesondere Methyl-, Ethyl-, Propyl- oder Butylgruppen. Insbesondere sind Tri- oder Dialkoxysilane mit Methoxy-, Ethoxy-, Propoxy- oder Butoxygruppen geeignet.

Beispiele für mercaptofunktionelle Silane sind 3-Mercaptopropyltrimethoxysilan, 3-Mercaptopropyltrimethoxysilan oder die entsprechenden Alkyldimethoxy- oder Alkyldiethoxy-Verbindungen. Beispiele für aminofunktionelle Silane sind 3-Amino-propyltrimethoxysilan (AMMO), 3-Aminopropyltriethoxysilan (AMEO), 3-Amino-propylmethyldimethoxysilan, 3-Aminopropylmethyldiethoxysilan, N-(2-Aminoethyl)-3-aminopropyltrimethoxysilan (DAMO), N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-Aminoethyl)-3-aminopropyltrimethoxy-silan, N,N-Di(2-Aminoethyl)-3-aminopropyltriethoxysilan, N,N-Di(2-Aminoethyl)-3-aminopropylmethyldimethoxysilan, N,N-Di(2-Aminoethyl)-3-aminopropylmethyldiethoxysilan, N-(2-Aminoethyl)-N'-(2-aminoethyl)-3-amino propyltrimethoxysilan, N-(2-Aminoethyl)-N'-(2-aminoethyl)-3-aminopropyltriethoxy silan, N-(2-Amino-ethyl)-N'-(2-aminoethyl)-3-aminopropylmethyldimethoxysilan, N-(2-Aminoethyl)-N'-(2-aminoethyl)-3-aminopropylmethyldiethoxysilan, Bis-(Triethoxy silylpropyl)-amin, Bis-(Trimethoxysilylpropyl)-amin, N-(2-Aminobutyl)-3-aminopropyltriethoxysilan, N-(2-Aminobutyl)-3-aminopropyltrimethoxysilan, N-(n-Butyl)-3-aminopropyltrimeth-oxysilan, N-(n-Butyl)-3-aminopropyltriethoxysilan, N-(n-Butyl)-3-aminopropyl-alkoxydiethoxysilan, 3-Hydroxypropyltrimethoxysilan, 3-Hydroxypropyltriethoxysilan, 4-Hydroxybutyltrimethoxysilan, oder Mischungen daraus sowie entsprechende Verbindungen, die anstelle der jeweiligen Propylgruppe eine andere Alkylgruppe tragen. Eine bevorzugte Ausführungsform setzt zur Umsetzung mit den Isocyanatprepolymeren α-funktionalisierte Silane ein, insbesondere Aminosilane, besonders bevorzugt α-Aminosilane. Es können auch Gemische mehrerer Silane eingesetzt werden.

Die Menge der umzusetzenden Silanverbindungen A wird so ausgewählt, dass nur ein Teil der Isocyanatgruppen des Prepolymeren mit einer nucleophilen Gruppe der Silanverbindung reagiert haben. Beispielsweise werden im Durchschnitt eine bis zu zwei NCO-Gruppen mit Silanverbindungen umgesetzt. Die weiteren noch enthaltenen NCO-Gruppen werden gleichzeitig oder anschließend durch Umsetzung mit Verbindungen (B) umgesetzt, die nur eine nucleophile Gruppe und keine Silangruppe aufweisen. Dabei wird die Menge dieser zusätzlichen Verbindungen so gewählt, dass alle NCO-Gruppen umgesetzt werden, das erhaltene Prepolymer also frei von NCO-Gruppen ist.

Die Verbindungen B sind monofunktionelle Verbindungen, die eine OH, NHAlkyl, oder SH-Gruppe aufweisen. Dadurch kann sichergestellt werden, dass kein weiterer Molekulargewichtsaufbau auftritt. Diese Verbindungen können gegebenenfalls weitere funktionelle Gruppen aufweisen, die unter den Umsetzungsbedingungen nicht mit den NCO-Gruppen reagieren. Beispiel dafür sind Estergruppen, Carbonylgruppen, Epoxidgruppen, olefinische Gruppen oder cyclische Carbonatgruppen.

Das Molekulargewicht dieser Verbindungen soll unter 500 g/mol betragen, insbesondere unter 300g/mol. Insbesondere sind Verbindungen mit einer OH-Gruppe oder einer sekundären Aminogruppe geeignet. Eine Ausführungsform setzt einwertige Alkohole eine, wie beispielsweise lineare oder verzweigte C1 bis C 12-Alkohole, eine andere Ausführungsform setzt Alkohole ein, die zusätzlich eine weitere funktionelle Gruppe aufweisen.

Erfindungsgemäß geeignete Prepolymere müssen vernetzbare Silangruppen aufweisen. Die Anzahl der hydrolysierbaren Silangruppen pro Molekül soll mindestens eine bis zu zwei betragen. In einer besonderen Ausführungsform sind die Silangruppen endständig zu der Polymerkette. Insbesondere sollen die Verbindungen (A), die vernetzbare Alkoxysilangruppe aufweisen, sowie die Verbindungen (B), die keine hydrolisierbaren Gruppen enthalten, zusammen in äquimolaren Mengen zu den vorhandenen NCO-Gruppen eingesetzt werden.

Die erfindungsgemäßen geeigneten Umsetzungsprodukte sind Prepolymere, die Silangruppen enthalten. Diese Prepolymere weisen in einer bevorzugten Ausführungsform im Schnitt zwei oder mehr Urethangruppen auf, bevorzugt zwei bis vier. Die Glasübergangstemperatur der Umsetzungsprodukte in lösemittelfreier Form soll zwischen -40 bis 0°C betragen, insbesondere zwischen -35°C bis -10°C (gemessen mit DSC). Die Glasübergangstemperatur kann durch die Menge der aromatischen Anteile von Polymerrückgrat oder Isocyanat beeinflusst werden. Es hat sich gezeigt, dass Silan-reaktive Prepolymere besonders geeignet sind, die auf Basis von Isocyanaten mit aromatischen Kernen hergestellt wurden. Beispiele dafür sind TDI, NDI, 4,4'-MDI, 2,4-MDI, mXDI oder TMXDI umgesetzt mit den Ausgangspolyolen.

Aus den oben beschriebenen Silan-funktionalisierten Prepolymeren können Kaschierklebstoffe formuliert werden. Es ist möglich, dass in diesen Kaschierklebstoffen zusätzliche Bestandteile enthalten sind, wie beispielsweise Lösemittel, Katalysatoren, Stabilisatoren, Haftvermittler, auch in einer weniger bevorzugten Ausführungsform, Weichmacher, Pigmente und Füllstoffe.

Erfindungsgemäß muss der 1-K Kaschierklebstoff zusätzlich Verbindungen enthalten, die funktionelle Gruppen aufweisen, die mit Alkoholen reagieren können. Dabei ist es bevorzugt, wenn die Reaktion zwischen Alkohol und reaktiver Gruppe der ausgewählten Verbindung eine Additionreaktion ist. Es sollen bei dieser Umsetzung bevorzugt keine niedermolekularen Substanzen frei werden. Insbesondere geeignet als funktionelle Gruppe sind Anhydride von organischen Carbonsäuren. Es kann sich dabei um monomere insbesondere bei 30°C feste Carbonsäureanhydride handeln, beispielsweise wie Maleinsäureanhydrid (MSA), Phthalsäureanhydrid, Trimesinsäureanhydrid oder Derivate solcher Verbindungen. Auch Oligomere von Verbindungen, die mehr als eine organische Anhydridgruppen tragen, können eingesetzt werden.

Eine besondere Ausführungsform der Erfindung verwendet Polymere mit einem Molekulargewicht größer 1000 g/mol, die Anhydridgruppen aufweisen. Geeignete Polymere sind bekannt, insbesondere solche mit MSA-Gruppen. Diese können durch Copolymerisation in die entsprechende Polymere eingebaut werden, es ist auch möglich, dass MSA auf Polymere gepfropft wird. Beispiele für geeignete Copolymere sind Copolymere aus MSA mit Styrol, Vinylacetat oder (Meth)Acrylaten. Beispiele für Copolymere, die mit MSA gepfropft werden können, sind Basispolymere aus Polypropylen, Polystyrol, Polyestern oder Polybutadienen. Diese können nach ihrer Herstellung in polymeranaloger Reaktion mit MSA über bekannte Verfahren gepfropft werden. Der Gehalt an MSA in den geeigneten Polymeren kann unterschiedlich sein, er kann von 3 Mol-% bis zu ca. 60 Mol-% Anhydridgruppen beantragen. Erfindungsgemäß ist es vorteilhaft, wenn höhere Anteile an MSA im Polymeren vorliegen, insbesondere von 10 bis 55 Mol.-%.

Eine besonders bevorzugte Ausführungsform setzt MSA-Styrolcopolymere ein. Diese weisen einen Gehalt an MSA zwischen 20 bis 55 Mol.-% auf. Es handelt sich um feste Substanzen.

Die Menge der Polymere oder Oligomere soll zwischen 1 bis 20 Gew.-% bezogen auf den Kaschierklebstoff betragen, insbesondere zwischen 2 bis 15 Gew.-%. Die Menge kann so gewählt werden, dass die Menge an Anhydridgruppen der Menge der Alkoxygruppen (stöchiometrisch betrachtet) in dem erfindungsgemäßen Klebstoff entspricht. Es kann auch ein Überschuss an Anhydridgruppen eingesetzt werden. Auch ggf. zusätzlich vorhandene nucleophile Gruppen tragende niedermolekulare Substanzen, wie Amin-haltige Verbindungen, können mit diesem Bestandteil reagieren.

Als weitere gegebenenfalls im Klebstoff enthaltene Additive können beispielsweise Weichmacher enthalten sein. Geeignete Weichmacher sind beispielsweise medizinische Weißöle, naphtenische Mineralöle, paraffinischen Kohlenwasserstofföle, Polypropylen-, Polybuten-, Polyisopren-Oligomere, hydrierte Polyisopren- und/oder Polybutadien-Oligomere, Phthalate, Adipate, Benzoatester, pflanzliche oder tierische Öle und deren Derivate. Um eine Migration aus der vernetzten Klebstoffschicht zu vermindern, ist es zweckmäßig nur geringe Anteil oder keine Weichmacher einzusetzen. Als einsetzbaren Stabilisatoren oder Antioxidantien können Phenole, sterisch gehinderte Phenole hohen Molekulargewichts, polyfunktionelle Phenole, schwefel- und phosphorhaltige Phenole oder Amine ausgewählt werden.

Ein erfindungsgemäßer Klebstoff kann auch Pigmente oder Füllstoffe enthalten. Die Mengen sollen von 0 bis 5 Gew.-% betragen. Der Klebstoff soll aber bevorzugt transparent sein. Ebenso ist es möglich, dem Klebstoff gegebenenfalls zusätzlich Silanverbindungen als Haftvermittler zuzusetzen. Als Haftvermittler können die oben angeführten Silane oder vorzugsweise organofunktionelle Silane wie (meth)acryloxyfunktionelle, epoxyfunktionelle oder nicht reaktiv substituierte Silane eingesetzt werden. In einer bevorzugten Ausführungsform werden dem Klebstoff 0 bis 3 Gew.-% solcher Silane zugesetzt. Diese können gegebenenfalls in das Polymernetzwerk eingebaut werden.

Als gegebenenfalls zusätzlich vorhandenes Additiv kann ein erfindungsgemäß geeigneter Klebstoff auch Katalysatoren enthalten. Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen katalysieren können. Beispiele hierfür sind Titanate, Wismutverbindungen, Zinncarboxylate, Zinnoxide, Chelatverbindungen von Aluminium oder Zirkon, Aminverbindungen oder ihre Salze mit Carbonsäuren, wie Octylamin, Cyclohexylamin, Benzylamin, Dibutylamin, Monoethanolamin, Di- oder Triethanolamin, Triethylamin, Tripropylamin Tributylamin, Diethanolamin, Dipropylamin, Dibutylamin, Diethylentriamin, Triethylentetramin, Triethylendiamin, Guanidin, Morpholin, N-methylmorpholin und 1,8-Diazabicyclo-(5,4,0)-undecen-7 (DBU). Der Katalysator oder Mischungen werden in einer Menge von 0,01 bis etwa 5 Gew.-% bezogen auf das Gesamtgewicht der Zubereitung eingesetzt. Bevorzugt sind 0,05 bis 4 Gew.-%, besonders bevorzugt von 0,2 bis 3 Gew.-% Katalysator. Es ist bevorzugt, wenn der Klebstoff keine Zinn-Katalysatoren enthält. Insbesondere können auch andere Schwermetall-haltige Katalysatoren vermieden werden.

Erfindungsgemäß enthalten die Klebstoffe auch Lösemittel. Es handelt sich dabei um die üblichen Lösemittel, die bei Temperaturen bis zu 130°C verdampfen können, insbesondere mit einem Siedepunkt unterhalb 100°C. Die Lösemittel können ausgewählt werden aus der Gruppe der aliphatischen Kohlenwasserstoffe, aromatische Kohlenwasserstoffe, Ketone oder Ester. Die Lösemittel dienen zur Absenkung und Einstellung der Viskosität. Der Anteil der Lösemittel kann in weiten Grenzen variieren, beispielsweise von 19 bis 74 % bezogen auf den Klebstoff. Dabei ist es bekannt, den Klebstoff in einer Lieferform hochviskos einzustellen, er kann dann vor der Applikation mit weiterem Lösemittel auf eine geeignete Viskosität verdünnt werden. Dabei soll die Summe aller Bestandteile 100 % betragen. Zur guten Lagerstabilität ist es zweckmäßig, wenn die erfindungsgemäß eingesetzten Lösemittel nur geringe Anteile oder kein Wasser enthalten.

Die Lösemittel der erfindungsgemäßen Klebstoffe können bei der Herstellung zugesetzt werden. Eine andere Ausführungsform arbeitet jedoch so, dass nur ein Anteil der Lösemittel bei der Herstellung eingesetzt wird, um eine zur Herstellung zweckmäßige Viskosität einzustellen. Ein weiterer Teil der Lösemittel im Rahmen der erfindungsgemäßen Zusammensetzung wird jedoch kurz vor der Verarbeitung dem Klebstoff zugesetzt, um eine geeignete Applikationsviskosität zu erhalten. Bei dieser Ausführungsform ist es möglich, dass zumindest teilweise die Lösemittel, die erst kurz vor der Applikation des Klebstoffs zugesetzt werden, auch organische monofunktionelle Alkohole enthalten. Beispiele dafür sind C₁-bis C₆ einwertige Alkohole. Diese Alkohole sollen gemäß den Anforderungen an die Lösemittel bei einer Temperatur unter 130°C verdampfen. Insbesondere sind Methanol, Ethanol oder Propanol geeignet. Dabei soll die Mengen an Alkohol bezogen auf den gesamten Lösemittelgehalt maximal 50% betragen, insbesondere weniger als 25%.

Es hat sich gezeigt, dass die Verarbeitungsstabilität des Klebstoffs mit den Lösemitteln ausreichend lang ist. Für einen Zeitraum bis zu 6 Stunden können die verdünnten Klebstoffe verarbeitet werden, ohne dass sich die Reaktivität bei der Vernetzung wesentlich ändert. Da die Lösemittel bei der Applikation verdampfen, ist die Wirkungsweise des erfindungsgemäße Klebstoffs nicht beeinträchtigt.

Die Viskosität der geeigneten Kaschierklebstoffe soll zwischen 50 bis 20000 mPas gemessen bei 15 bis 45°C betragen, bevorzugt 100 bis 5000 mPas, (gemessen nach Brookfield, gemäß ISO 2555). Zur Applikation wird der Klebstoff meistens mit Lösemittel verdünnt. Dabei kann die Viskosität von ca. 50 m Pas bis zu 800 mPas (bei 20 bis 45°C) betragen. Der Festkörper in der Applikationsform liegt bevorzugt zwischen 15 bis 60 %, besonders bevorzugt 30 bis 50 Gew.-%. Da eine schnelle Weiterverarbeitung notwendig ist, sollen die Klebstoffe rasch vernetzen und eine gute Kohäsion und Adhäsion aufbauen. Erfindungsgemäß ist eine Vernetzung des aufgetragenen Klebstoffs auch bei einer geringen Feuchtigkeit der zu verklebenden Substrate möglich.

Die Tg des vernetzten Klebstoffs zwischen -15 bis +30°C betragen, insbesondere zwischen -10 bis +20°C. Als lösemittelfreier vernetzter Zustand soll eine Probe des vollständigen Klebstoffs von weniger als 0,5 g angesehen werden, die mit einer Heizrate von 10 K pro Minute von 0 auf 200°C geheizt wurde. Danach kann die Tg des vernetzten Materials mittels DSC (differential scanning calorimetry) bestimmt werden.

Die erfindungsgemäßen Klebstoffe sind sehr lagerstabil. Durch die verminderte Menge der Vernetzungsgruppen ist ein vorzeitiger Molekulargewichtsaufbau verhindert. Es ist üblich, eine lösemittelarme Form zu lagern. Diese kann dabei eine höhere Viskosität aufweisen. In einer Ausführungsform ist es möglich, diese lösemittelreduzierten Kaschierklebstoffe zur die Applikation zu erwärmen, beispielsweise bis 45°C und danach aufzutragen. In einer anderen Ausführungsform wird der Klebstoff bei der Anwendung auf eine niedrige Viskosität mit Lösemitteln verdünnt und dann aufgetragen. Dabei bleibt die Viskosität des Klebstoffes auch bei längerer Lagerung niedrig.

Ein weiterer Gegenstand der Erfindung ist die Verwendung der erfindungsgemäßen vernetzbaren Silan-funktionalisierten Klebstoffe zur Herstellung von Mehrschichtfolien. Ebenfalls Gegenstand der Erfindung ist eine Mehrschichtfolie, die mit einem erfindungsgemäß geeigneten Kaschierklebstoff verklebt ist. Als Folienmaterialien zum Herstellen von Mehrschichtfolien können die bekannten flexiblen Folien eingesetzt werden. Es handelt sich dabei um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, organische Polymere, wie Cellophan, es sind auch Metallfolien oder Papier als Substrate möglich. Dabei könne die Folienmaterialen auch modifiziert sein, z.B. durch Modifizieren der Polymere mit funktionellen Gruppen, durch Metall- oder Oxidbeschichtungen, oder es können zusätzliche Komponenten, beispielsweise Pigmente, Farbstoffe, oder geschäumte Schichten in der Folie enthalten sein. Es kann sich um gefärbte, bedruckte, farblose oder transparente Folien handeln.

Bei der erfindungsgemäßen Verwendung werden zwei oder mehrere, gleiche oder insbesondere unterschiedliche Folien mit einem erfindungsgemäß geeigneten 1 K-Klebstoff miteinander verklebt. Auf die gegebenenfalls vorbehandelte Folie wird dann ein erfindungsgemäßer flüssiger Kaschierklebstoff aufgetragen. Das kann durch an sich bekannte Druckverfahren, z. B. mit Rasterwalzen, Glattwalzen, erfolgen, der Klebstoff wird über Düsen aufgesprüht oder es wird der Klebstoff über Schlitzdüsen aufgetragen. Das Auftragsverfahren ist in Abhängigkeit von der Viskosität des Klebstoffs auszuwählen. Dabei kann der Klebstoff in dünner Schichtstärke von 1 bis 25 µm, insbesondere von 2 bis 15 µm aufgetragen werden. Unmittelbar danach verdampfen die enthaltenen Lösemittel, danach wird eine zweite Folie auf die Klebstoffschicht aufgebracht und mit Druck verpresst.

Die Alkohole verdampfen bei dem Auftragsprozess schnell. Nur geringe Mengen an restlichen Alkoholen oder solche aus der Vernetzungsreaktion werden durch das vorhandene Oligomer/Polymer mit Anhydridgruppen abgefangen.

Durch die ausgewählte Menge der Alkoxysilan-Gruppen ist es möglich, dass der Klebstoff schnell vernetzt. Dabei entstehen durch die Reaktion keine Blasen, die bei Klebstoffen auf Isocyanat-Basis bei hochreaktiven Systemen nur schwer zu vermeiden sind. Ein weiterer Vorteil des vernetzten Kaschierklebstoffs ist die Hervorragende Lagerstabilität in gelöster Form.

Der erfindungsgemäße Klebstoff zeigt eine gute Haftung zwischen den unterschiedlichen Schichten. Er ist insbesondere farblos und durchsichtig. Er zeigt keine Blasen oder Fehlstellen in der Klebstoffschicht. Deswegen ist er speziell als Kaschierklebstoff zum Verkleben von flexiblen folienförmigen Substraten geeignet. Weiterhin werden die bei der Vernetzung entstehenden Alkohole durch die anhydridgruppenhaltigen Polymere abgefangen. Dabei entstehen hochmolekulare Umsetzungsprodukte, diese sind nicht migrationsfähig. Also werden vernetzte Klebstoffschichten erhalten, die nur geringe Anteile an migrationsfähigen Substanzen enthalten. Solche Mehrschichtfolien sind deswegen insbesondere für die Verpackungsindustrie geeignet, beispielsweise zur Herstellung von Verpackungen von Lebensmitteln oder medizinischen Produkten.

### Beispiele

### Beispiel Polyester 1:

Es wurde ein Polyester aus Adipinsäure und Isophthalsäure zusammen mit Diethylenglykol hergestellt.

Der Polyester hatte ein Molekulargewicht von ca. 2000 g/mol. Die OH-Zahl betrug ca. 58, die Säurezahl war kleiner 2.

### Beispiel Prepolymer 2:

51,5 Teile des Polyesters 1 wurden in 38,5 Teile Ethylacetat gelöst und danach mit 6 Teilen TDI 100 umgesetzt. Danach wurden 2 Teile Bis(3-triethoxysilyl-propyl)amin zugesetzt sowie 0,4 Teile Ethanol.

Das entstehende Produkt besaß einen Festkörper von 62 % . Es enthielt keine weiteren Isocyanatgruppen. Die Viskosität betrug ca. 1500 mPas (20 °C), das Molekulargewicht (M_{N}) ca. 8000 g/mol.

### Beispiel Prepolymer 3:

49 Teile des Polyesters 1 wurden in 38,5 Teile Ethylacetat gelöst und danach mit 5,4 Teilen TDI 100 umgesetzt. Danach wurden 2 Teile Bis(3-triethoxysilyl-propyl)amin zugesetzt sowie 2 Teile Stearylalkohol.

Das entstehende Produkt besaß einen Festkörper von 62 % . Es enthielt keine weiteren Isocyanatgruppen. Die Viskosität betrug ca. 2000 mPas (20 °C), das Molekulargewicht (M_{N}) ca. 8000 g/mol.

### Beispiel Klebstoff 4:

Zu dem Prepolymer aus Beispiel 2 wurden 1,6 Teile (ca. 2,5 % auf Festkörper) eines Styrolcopolymere enthaltend ca. 50 Gew.% MSA-Bausteine zugesetzt und homogenisiert. Die Viskosität betrugt ca. 1500 mPas (20°C).

### Beispiel Klebstoff 5:

Zu dem Prepolymer aus Beispiel 3 wurden 1,6 Teile (ca. 2,5 % auf Festkörper) eines Styrolcopolymeren enthaltend ca. 50 Gew.% MSA-Bausteine zugesetzt und homogenisiert. Die Viskosität betrugt ca. 2000 mPas (20°C).

### Vergleich 6:

51,5 Teile des Polyesters 1 wurden in 38,5 Teile Ethylacetat gelöst und danach mit 6 Teilen TDI 80 umgesetzt. Danach wurden 4,3 Teile Bis(3-triethoxysilyl-propyl)amin zugesetzt.

Das entstehende Produkt besaß einen Festkörper von 62 %. Es enthielt keine weiteren Isocyanatgruppen.

Zu dem Prepolymer wurden 1,6 Teile (ca. 2,5 % auf Festkörper) eines Styrolcopolymere enthaltend ca. 50 Gew.% MSA-Bausteine zugesetzt und homogenisiert. Die Viskosität betrug ca. 1400 mPas (20°C).

| | | | |
|---|---|---|---|
| Viskosität | 1 d | 70 d (20°C) | 70 d (50°C) |
| Klebstoff 4 | 1500 | < 2000 | ∼ 3000 mPas |
| Klebstoff 5 | 2000 | < 2000 | ∼ 5000 m Pas |
| Vergleich 6 | 1400 | ca. 4500 | |

Alle Klebstoffe wurden vor der Applikation mit Ethylacetat verdünnt auf eine Festkörper von ca. 31%.

Dabei betrug die Viskosität in jedem Fall unter 800 mPas (20°C).

### Verklebung:

Es wurden Folien auf Basis von Polyethylen (PE) mit einem Rakel mit den erfindungsgemäßen Klebstoffen beschichtet. Die Schichtstärke betrug 5 µm.

Eine andere Folie wurde analog mit einer Schichtstärke von 10 µm beschichtet. Die beschichtete Oberfläche wurde ca. 1 min. abgelüftet bei 30°C. Danach wurde auf die jeweils beschichtete Folie eine zweite Folie auf Basis OPP mit einer Walze aufgequetscht.

Es wurden PET Folien mit einem Rakel mit den Klebstoffen mit einer Schichtstärke von 3 g/m² beschichtet. Nach dem Ablüften wurden diese Folien mit einer Al-Folie verklebt.

Nach 6 Tagen und nach 14 Tagen wurde die Verklebung der Foliensubstrate bestimmt. Es war in allen Fällen eine gute Haftung miteinander festzustellen.

Aus den verklebten Folien wurde mittels Headspace GC nach 24 Std. der Gehalt an Ethylacetat und an Ethanol bestimmt.

| Beispiele | EtOH | EtOAc | Haftung |
|---|---|---|---|
| 3 | <20 | 2 mg/m² | 4-5 N/15 mm |
| 4 | <20 | 2 | 4-5 N/15 mm |

Die Versuche zeigen, dass mit Zusatz der MSA-haltigen Bestandteile der Alkoholgehalt vermindert war. Der Klebstoff mit reduziertem Silangehalt weist eine besonders niedrige Viskosität über die Lagerzeit auf als Klebstoffe mit höherem Silangehalt.

## Patentansprüche

1. Vernetzbarer 1-Komponenten-Kaschierklebstoff enthaltend
a) 25 bis 80 Gew- % Polyesterprepolymere, Polyetherprepolymere und /oder Polyurethanprepolymere, die frei von NCO-Gruppen sind, die mindestens eine über NCO-Gruppen gebundene vernetzbare Alkoxysilangruppe aufweisen sowie zusätzlich NCO-Gruppen umgesetzt mit Verbindungen, die keine hydrolisierbaren Gruppen enthalten, und das Prepolymer ein Molekulargewicht von 2000 bis 30000 g/mol besitzt,
b) 74 bis 19 Gew-% organische Lösemittel mit einem Siedepunkt bis 130°C,
c) 1 bis 20 Gew.-% Polymere, Oligomere und/oder Monomere, die eine oder mehrere Anhydridgruppen enthalten
d) 0 bis 15 Gew- % Additive,
wobei die Viskosität des Klebstoffs zwischen 50 bis 20000 mPas, nach DIN ISO 2555, beträgt, gemessen bei 15 bis 45°C.

2. 1-K-Klebstoff nach Anspruch 1, **dadurch gekennzeichnet, dass** das Polyesterprepolymer oder Polyurethanprepolymer hergestellt wird aus Polyesterpolyolen mit einem Molekulargewicht von 400 bis 25000 g/mol, die mindestens zwei OH-Gruppen aufweisen, insbesondere bis zu drei OH-Gruppen.

3. 1-K-Klebstoff nach einem der Ansprüche 1 oder 2, **dadurch gekennzeichnet, dass** das Prepolymere im Durchschnitt weniger als zwei Trialkoxysilangruppen enthält, insbesondere Triethoxysilangruppen, Trimethoxysilangruppen oder Tripropoxysilangruppen.

4. 1 K-Klebstoff nach einem der Ansprüche 1 bis 3, **dadurch gekennzeichnet, dass** die Prepolymere durch Reaktion von Polyesterpolyolen mit einem Überschuss an Diisocyanaten zu einem NCO-Gruppen-haltigen Prepolymer hergestellt werden, wobei anschließend Aminosilane und einwertige OH, NHR oder SHhaltige Verbindungen mit einer Molmasse unter 500g/mol mit den NCO-Gruppen umgesetzt werden.

5. 1 K-Klebstoff nach Anspruch 4, **dadurch gekennzeichnet, dass** der Klebstoff 2 bis 15 Gew-% Polymere, Oligomere und/oder Monomere mit cyclischen Anhydridgruppe aufweist.

6. 1-K-Klebstoff nach Anspruch 5, dadurch gekennezeichnet, dass die Anhydridenthaltene Polymere ein Molekulargewicht größer 1000 g/mol aufweisen, insbesondere MSA-Styrolcopolymer oder als MSA-(Meth)Acrylat-copolymer.

7. 1-K-Klebstoff nach einem der Ansprüche 1 bis 6, **dadurch gekennzeichnet, dass** die Menge der cyclischen Anhydridgruppen stöchiometrisch mindestens der Menge der Alkoxygruppen entspricht.

8. 1-K-Klebstoff nach Anspruch 4 oder 7, **dadurch gekennzeichnet, dass** als Verbindungen, die keine hydrolisierbaren Gruppen enthalten, einwertige -OH, -SH oder-NHAlkyl-Guppen haltige Verbindungen eingesetzt werden.

9. 1-K-Klebstoff nach Anspruch 8, **dadurch gekennzeichnet, dass** als einwertige Verbindungen einwertige lineare oder verzweigte Alkohole umgesetzt werden, insbesondere mit bis zu 12 C-Atomen.

10. 1-K-Klebstoff nach Anspruch 1 bis 8, **dadurch gekennzeichnet, dass** als organische Lösemittel, bis zu 50 %, bezogen auf alle Lösemittel, C₁-bis C₆-monofunktionelle Alkohole enthalten sind, insbesondere Methanol, Ethanol oder Propanol.

11. 1-K-Klebstoff nach Anspruch 1 bis 10, **dadurch gekennzeichnet, dass** die Verbindungen (A), die vernetzbare Alkoxysilangruppe aufweisen, sowie die Verbindungen (B), die keine hydrolisierbaren Gruppen enthalten, zusammen in äquimolaren Mengen zu den vorhandenen NCO-Gruppen eingesetzt werden.

12. Verfahren zum Verkleben von Foliensubstraten, wobei ein 1 K-Klebstoff nach einem der Ansprüche 1 bis 11 eingesetzt wird, der vor der Applikation mit Lösemitteln in der Viskosität eingestellt wird, die C₁ bis C₆ Alkohole enthalten, Auftragen und Ablüften des Klebstoffs auf ein erstes Substrat und anschließendes Verkleben mit einem zweiten Foliensubstrat.

13. Verwendung von 1-K-Klebstoffen nach einem der Ansprüche 1 bis 10 zum Verkleben von flexiblen folienförmigen Substraten, insbesondere Polymerfolien, Papierfolien, Metallfolien sowie Oberflächen-behandelte Folien.

## Claims

1. A cross-linkable one-component laminating adhesive containing:
a) 25 to 80 wt.% polyester prepolymers, polyether prepolymers and/or polyurethane prepolymers that are free of NCO groups and that comprise at least one cross-linkable alkoxysilane group bound via NCO groups and additionally NCO groups reacted with compounds containing no hydrolyzable groups, and the prepolymer having molecular weight from 2000 to 30000 g/mol;
b) 74 to 19 wt.% organic solvents having a boiling point of up to 130°C;
c) 1 to 20 wt.% polymers, oligomers and/or monomers containing one or more anhydride groups;
d) 0 to 15 wt.% additives,
wherein the viscosity of the adhesive is between 50 and 20000 mPas, according to DIN ISO 2555, measured at 15 to 45°C.

2. The one-component adhesive according to claim 1, **characterized in that** the polyester prepolymer or polyurethane prepolymer is produced from polyester polyols that have a molecular weight from 400 to 25000 g/mol and that comprise at least two OH groups, in particular up to three OH groups.

3. The one-component adhesive according to either claim 1 or 2, **characterized in that** the prepolymer contains on average fewer than two trialkoxysilane groups, in particular triethoxysilane groups, trimethoxysilane groups or tripropoxysilane groups.

4. The one-component adhesive according to one of claims 1 to 3, **characterized in that** the prepolymers are produced by reacting polyester polyols with an excess of diisocyanates to yield an NCO group-containing prepolymer, subsequently aminosilanes and monovalent OH-, NHR-, or SH-containing compounds having a molar mass below 500 g/mol being reacted with the NCO groups.

5. The one-component adhesive according to claim 4, **characterized in that** the adhesive comprises 2 to 15 wt.% polymers, oligomers and/or monomers having a cyclic anhydride group.

6. The one-component adhesive according to claim 5, **characterized in that** the anhydride-containing polymers have a molecular weight greater than 1000 g/mol, in particular in the form of maleic anhydride-styrene copolymer or maleic anhydride-(meth)acrylate copolymer.

7. The one-component adhesive according to one of claims 1 to 6, **characterized in that** the quantity of cyclic anhydride groups stoichiometrically corresponds at least to the quantity of alkoxy groups.

8. The one-component adhesive according to claim 4 or 7, **characterized in that** monovalent compounds containing -OH, -SH, or -NH-alkyl groups are used as compounds that contain no hydrolyzable groups.

9. The one-component adhesive according to claim 8, **characterized in that** monohydric linear or branched alcohols, in particular having up to 12 carbon atoms, are reacted as monovalent compounds.

10. The one-component adhesive according to claims 1 to 8, **characterized in that** C₁- to C₆-monofunctional alcohols, in particular methanol, ethanol or propanol, are present as organic solvents in a quantity of up to 50%, based on all solvents.

11. The one-component adhesive according to claims 1 to 10, **characterized in that** compounds (a), which comprise cross-linkable alkoxysilane groups, and compounds (b), which contain no hydrolyzable groups, are used together in equimolar quantities with respect to the NCO groups that are present.

12. A method for bonding foil substrates, wherein a one-component adhesive according to one of claims 1 to 11 is used, the viscosity of which is set prior to application by way of solvents that contain C₁ to C₆ alcohols, applying the adhesive to a first substrate and flashing off the adhesive, and subsequently bonding to a second foil substrate.

13. Use of one-component adhesives according to one of claims 1 to 10 for bonding flexible foil-shaped substrates, in particular polymer foils, paper foils, metal foils, and surface-treated foils.

## Revendications

1. Adhésif mono-composant réticulable à contre-coller contenant
a) 25 à 80% en poids de prépolymères polyester, de prépolymères polyéther et et/ou de prépolymères polyuréthane qui sont exempts de groupes NCO, qui comportent au moins un groupe alkoxysilane réticulable par le biais de groupes NCO et, en plus des groupes NCO qui ont réagi avec des composés qui ne contiennent pas de groupes hydrolysables, et le prépolymère ayant un poids moléculaire de 2000 à 30000 g/mol,
b) 74 à 19% en poids de solvants organiques ayant un point d'ébullition jusqu'à 130°C,
c) 1 à 20% en poids de polymères, d'oligomères et/ou de monomères qui contiennent un ou plusieurs groupes anhydrides,
d) 0 à 15% en poids d'additifs,
la viscosité de l'adhésif étant comprise entre 50 et 20000 mPas selon la norme DIN ISO 2555, mesurée à 15 à 45°C.

2. Adhésif mono-composant selon la revendication 1, **caractérisé en ce que** le prépolymère polyester ou le prépolymère polyuréthane est préparé à partir de polyester-polyols ayant un poids moléculaire de 400 à 25000 g/mol qui comportent au moins deux groupes OH, en particulierjusqu'à trois groupes OH.

3. Adhésif mono-composant selon l'une des revendications 1 ou 2, **caractérisé en ce que** le prépolymère contient en moyenne moins de deux groupes trialcoxysilane, en particulier des groupes triéthoxysilane, triméthoxysilane ou tripropoxysilane.

4. Adhésif mono-composant selon l'une quelconque des revendications 1 à 3, **caractérisé en ce que** les prépolymères sont préparés par réaction de polyester-polyols avec un excès de düsocyanates pour former un prépolymère contenant des groupes NCO, des aminosilanes et des composés monovalents contenant OH, NHR ou SH ayant un poids moléculaire inférieur à 500 g/mole étant ensuite mis en réaction.

5. Adhésif mono-composant selon la revendication 4, **caractérisé en ce que** l'adhésif comporte 2 à 15% en poids de polymères, d'oligomères et/ou de monomères contenant des groupes anhydres cycliques.

6. Adhésif mono-composant selon la revendication 5, **caractérisé en ce que** les polymères contenant des groupes anhydrides ont un poids moléculaire supérieur à 1000 g/mol, en particulier un copolymère styrène-anhydride maléique ou un copolymère anhydride maléique-(méth)acrylate.

7. Adhésif mono-composant selon l'une des revendications 1 à 6, **caractérisé en ce que** la quantité de groupes anhydrides cycliques correspond du point de vue stoechiométrique au moins à la quantité de groupes alcoxy.

8. Adhésif mono-composant selon la revendication 4 ou 7, **caractérisé en ce qu'**on utilise comme composés, qui ne contiennent pas de groupes hydrolysables, des composés monovalents qui contiennent des groupes -OH, -SH ou -NH-alkyle.

9. Adhésif mono-composant selon la revendication 8, **caractérisé en ce qu'**on utilise comme composés monovalents des alcools monovalents linéaires ou ramifiés, ayant en particulier jusqu'à 12 atomes de carbone.

10. Adhésif mono-composant selon la revendication 1 à 8, **caractérisé en ce qu'**il contient comme solvants organiques jusqu'à 50%, sur la base de tous les solvants, d'alcools monofonctionnels en C₁ à C₆, en particulier le méthanol, l'éthanol ou le propanol.

11. Adhésif mono-composant des revendications 1 à 10, **caractérisé en ce que** les composés (A), qui comportent un groupe alcoxysilane réticulable, et les composés (B), qui ne contiennent pas de groupes hydrolysables, peuvent être utilisés conjointement dans des quantités équimolaires par rapport aux groupes NCO existants.

12. Procédé de collage de substrats en feuille, dans lequel on utilise un adhésif mono-composant selon l'une des revendications 1 à 11, qui est utilisé avant l'application des solvants dans la viscosité, qui contiennent des alcools en C₁ à C₆, d'application et de séchage de l'adhésif sur un premier substrat, puis de liaison à un second substrat en feuille.

13. Utilisation d'adhésifs mono-composant selon l'une des revendications 1 à 10 pour coller des substrats flexibles en forme de feuilles, en particulier des feuilles de polymère, des feuilles de papier, des feuilles métalliques et des feuilles traitées en surface.
